# EUROPÄISCHE PATENTANMELDUNG

(11) **EP 3 650 844 A1**
(43) Veröffentlichungstag der Anmeldung: **13.05.2020**
(21) Anmeldenummer: 18205427.0
(22) Anmeldetag: 09.11.2018
(51) Int. Cl.: G01N 21/88, F21V 14/02, F21V 19/02, F21V 21/15, F21V 23/04, H05B 33/08, H05B 37/02

(54) **BELEUCHTUNGSVORRICHTUNG ZUR BELEUCHTUNG EINES VON ZUMINDEST EINEM BILDSENSOR ÜBERWACHTEN BEREICHS**

(71) Anmelder: B&R Industrial Automation GmbH, 5142 Eggelsberg (AT)
(72) Erfinder: Demmelhuber, Hermann, 84489 Burghausen (DE); Waldl, Andreas, 5142 Eggelsberg (AT)
(74) Vertreter: Patentanwälte Pinter & Weiss OG

(57) **Zusammenfassung**

Die Erfindung betrifft eine Beleuchtungsvorrichtung (1) zur Beleuchtung eines von zumindest einem Bildsensor (2) überwachten Bereichs. Die Beleuchtungsvorrichtung (1) weist zumindest einen Leuchtmittelträger (3) mit zumindest einem daran angeordneten Leuchtmittel (4) auf. Weiters weist die Beleuchtungsvorrichtung (1) eine Steuerungs- und Schnittstelleneinheit (7) und eine von der Steuerungs- und Schnittstelleneinheit (7) betätigbare Verstelleinheit (5) auf, mit welcher der Leuchtmittelträger (3) positionierend verstellbar ist.

## Beschreibung

Die gegenständliche Erfindung betrifft eine Beleuchtungsvorrichtung zur Beleuchtung eines von zumindest einem Bildsensor überwachten Bereichs, wobei die Beleuchtungsvorrichtung zumindest einen Leuchtmittelträger mit zumindest einem daran angeordneten Leuchtmittel aufweist. Weiters betrifft die Erfindung ein modulares Beleuchtungssystem und ein Bilderfassungssystem zur Verwendung in einem maschinell sehenden System.

Zur Ausleuchtung von Bereichen, die mit Bildsensoren, insbesondere mit Maschine-Vision-Kameras (MV-Kameras) überwacht werden, werden Beleuchtungsvorrichtungen gewünscht, die eine möglichst homogene Ausleuchtung gewährleisten.

Dazu können beispielsweise Linear-, Balken- und/oder Ringleuchten verwendet werden, die eine Anordnung mehrerer, im Allgemeinen parallel zueinander angeordneter Hochleistungs-LEDs aufweisen. Für viele industrielle Anwendungen müssen solche Leuchten genau auf einen zu beleuchtenden Bereich eingestellt werden, was üblicherweise manuell erfolgt. Dabei wird üblicherweise durch mehr oder weniger systematisches Ausprobieren die Ausrichtung verstellt, bis eine optimale Position gefunden wird. Diese wird dann im Allgemeinen nicht mehr verändert. Dieser Vorgang ist nicht nur zeitaufwändig, sondern auch sehr ungenau. So ist es beispielsweise fast unmöglich, mehrere Balkenleuchten von Hand auf einen identischen Winkel einzustellen. Falls die Beleuchtungsanordnung aufgrund geänderter Vorgaben verändert werden muss, muss auch der gesamte Einstellungsvorgang wiederholt werden.

Ein weiteres Problem tritt im Stand der Technik auf, wenn sich die Homogenität der Ausleuchtung im Lauf der Zeit verändert. Dies kann beispielsweise dann der Fall sein, wenn sich die Wellenlänge der Leuchtmittel (geregelt oder aufgrund von Temperaturänderungen und/oder Alterung) verändert. Dadurch verändert sich nämlich auch der (frequenzabhängige) Brechungsindex, sodass der Abstrahlungswinkel des Leuchtmittels sich verändert. Dieser Effekt tritt beispielsweise bei Hochleistungs-Leuchtdioden, die in einen Linsenkörper eingebettet sind, verhältnismäßig stark auf. Die Homogenität der Ausleuchtung kann sich aber auch verändern, wenn sich etwa die Beleuchtungsvorrichtung beispielsweise aufgrund von Vibrationen aus ihrer ursprünglichen Position bewegt hat.

Die gegenständliche Erfindung hat die Aufgabe, eine Beleuchtungsvorrichtung der eingangs genannten Art bereitzustellen, die die Nachteile des Standes der Technik überwindet.

Diese und weitere Aufgaben werden erfindungsgemäß durch eine Beleuchtungsvorrichtung der eingangs genannten Art gelöst, die eine Steuerungs- und Schnittstelleneinheit und eine von der Steuerungs- und Schnittstelleneinheit betätigbare Verstelleinheit aufweist, mit welcher der Leuchtmittelträger positionierend verstellbar ist. Somit kann der von den Leuchtmitteln ausgestrahlte Lichtkegel ohne manuellen Eingriff verändert werden.

In einer vorteilhaften Ausgestaltung der Erfindung kann der Leuchtmittelträger um zumindest eine Schwenkachse schwenkend verstellbar sein. Dadurch lässt sich eine elektronisch winkelverstellbare homogene Beleuchtung erzielen. Die Richtung des vom Leuchtmittel ausgestrahlten Lichtkegels, insbesondere die Richtung der Mittelachse dieses Lichtkegels, wird im Zusammenhang mit der gegenständlichen Offenbarung auch als Abstrahlungsrichtung oder Abstrahlungswinkel bezeichnet.

In vorteilhafter Weise kann die Steuerungs- und Schnittstelleneinheit zur Steuerung der Wellenlänge und/oder der Intensität und/oder des zeitlichen Verlaufs der Aktivierung zumindest eines der Leuchtmittel ausgebildet sein. Dadurch lassen sich unterschiedliche Beleuchtungssituationen reproduzierbar einstellen. Intensität bzw. Wellenlänge können entweder für alle Leuchtmittel einer Beleuchtungsvorrichtung identisch vorgegeben sein, oder sie können unterschiedlich vorgegeben werden, etwa um mit der Verfügbaren Anzahl an Leuchtmitteln eine Lichtintensitäts- und/oder Wellenlängenverteilung zu erzeugen.

Erfindungsgemäß kann die Steuerungs- und Schnittstelleneinheit in einer weiteren vorteilhaften Ausführungsform der Beleuchtungsvorrichtung mit einem internen oder externen Sensor verbunden sein, welcher eine Ermittlung einer aktuellen Lage der Beleuchtungsvorrichtung und/oder des Leuchtmittelträgers im Raum erlaubt. Der Sensor kann beispielsweise ein Lagesensor oder ähnliches sein. Dadurch lässt sich beispielsweise ein Winkel des von der Beleuchtungsvorrichtung abgestrahlten Lichtkegels automatisch an eine geänderte Lage anpassen.

In vorteilhafter Weise kann die Steuerungs- und Schnittstelleneinheit der Beleuchtungsvorrichtungen zum Ausgleich einer wellenlängenbedingten Änderung eines Abstrahlungswinkels der Leuchtmittel betätigbar sein. Dieser Ausgleich kann gegebenenfalls automatisch erfolgen. Beispielsweise kann die Steuerungs- und Schnittstelleneinheit den Abstrahlungswinkel des Leuchtmittels durch Verstellen des Leuchtmittelträgers automatisch anpassen, wenn die Wellenlänge des Leuchtmittels geändert wird, wenn sich dabei in der entsprechenden Konfiguration eine (mitunter nur geringe) Änderung des Abstrahlungswinkels ergibt.

In einer vorteilhaften Ausführungsform kann die Position des Leuchtmittelträgers durch die Steuerungs- und Schnittstelleneinheit zur Einstellung eines definierten Abstrahlungswinkels regelbar sein. Dadurch kann die Ausrichtung der Beleuchtung beispielsweise auf einen vom Benutzer vorgegebenen Winkel eingestellt werden.

In einer weiteren vorteilhaften Ausführungsform kann die Position des Leuchtmittelträgers durch die Steuerungs- und Schnittstelleneinheit zur Regelung eines fixen oder veränderlichen Vorgabewerts regelbar sein. Dadurch lässt sich eine Lage des Beleuchtungswinkels in Echtzeit einstellen und einem Vorgabewert nachführen.

In vorteilhafter Weise kann die Position des Leuchtmittelträgers durch die Steuerungs- und Schnittstelleneinheit unter Berücksichtigung einer Ausrichtung des Bildsensors regelbar sein, wodurch beispielsweise der von der (bzw. den) Beleuchtungsvorrichtung(en) beleuchtete Bereich mit dem vom Bildsensor aufgezeichneten Bereich mitbewegt werden kann.

In einer weiteren vorteilhaften Ausgestaltung der Erfindung kann die Position des Leuchtmittelträgers durch die Steuerungs- und Schnittstelleneinheit in Abhängigkeit eines von einer industriellen Anlage ausgeführten Fertigungsprozesses regelbar sein. Damit kann beispielsweise in einer Flaschenabfüllanlage eine Anpassung an unterschiedliche Chargen mit unterschiedlichen Losgrößen umgesetzt werden.

Bevorzugter Weise kann die Position des Leuchtmittelträgers durch die Steuerungs- und Schnittstelleneinheit in Abhängigkeit einer Position eines zu überwachenden Bereichs regelbar sein. Die Position des zu überwachenden Bereichs kann beispielsweise durch ein bewegtes Objekt, etwa ein in einer Förder- oder Fertigungsanlage bewegtes Werkstück, definiert sein, das sich somit immer in einer optimal ausgeleuchteten Lage befindet.

In einer weiteren vorteilhaften Ausführungsform kann die Steuerungs- und Schnittstelleneinheit mit zumindest einem internen oder externen Homogenitätssensor verbunden oder an einen solchen anschließbar sein, über welchen eine aktuelle Homogenität einer Ausleuchtung ermittelbar ist. Dadurch lässt sich eine automatische Homogenitätsregulierung einer beleuchteten Fläche durch Anpassung des Winkels des Lichtkegels erzielen. Die Detektion der aktuellen Homogenität kann beispielsweise mit Hilfe eines eingebauten oder externen Flächen- oder Zeilensensors erfolgen.

In vorteilhafter Weise kann zumindest ein Leuchtmittel der Beleuchtungsvorrichtung eine Leuchtdiode umfassen. Dies erlaubt eine gute Regelbarkeit und hohe Lichtausbeute, die erfindungsgemäße Beleuchtungsvorrichtung kann jedoch zusätzlich oder alternativ auch Leuchtmittel anderer Art umfassen.

Die Steuerungs- und Schnittstelleneinheit kann gemäß einer weiteren Ausführungsform der erfindungsgemäßen Beleuchtungsvorrichtung zumindest ein Kommunikationsschnittstelle zur Kommunikation mit zumindest einer anderen Beleuchtungsvorrichtung und/oder einer zentralen Steuereinheit aufweisen. Dadurch kann die Beleuchtungsvorrichtung einerseits von einer zentralen Steuereinheit aus angesteuert werden kann. Die zentrale Steuereinheit kann beispielsweise eine Speicherprogrammierbare Steuerung (SPS) oder ein Computer sein. Die Kommunikationsschnittstelle kann beispielsweise eine Bus-Schnittstelle zur einem industriellen Bussystem, sein. Es sind jedoch auch andere Verbindungen, wie etwa eine Ethernet- oder WLAN-Verbindung denkbar. Andererseits könnte die Beleuchtungsvorrichtung auch autonom, d.h. ohne kabelgebunden Stromversorgung und Kommunikationsanbindung, ausgeführt sein. Die Energieversorgung könnte in diesem Fall induktiv erfolgen und/oder die Beleuchtungsvorrichtung könnte mit einem Akku versehen sein, um sich gänzlich unabhängig von allen physikalischen Verbindungen zu sein. In diesem Zusammenhang wäre es auch möglich, die Beleuchtungsvorrichtung in Bereichen einzusetzen, in denen keine Kommunikationsverbindung zu einer zentralen Steuereinheit möglich oder gewünscht ist, wobei die Steuerungs- und Schnittstelleneinheit in diesem Fall so ausgebildet sein kann, dass sie die gesamte Regelung der Funktionalitäten der Beleuchtungsvorrichtung autonom erledigen kann.

Die Steuerungs- und Schnittstelleneinheit der Beleuchtungsvorrichtung kann gegebenenfalls zumindest eine weitere Kommunikationsschnittstelle aufweisen, an der weitere, von dieser Beleuchtungsvorrichtung abhängige Beleuchtungsvorrichtungen angeschlossen werden können. Diese von der ersten Beleuchtungsvorrichtung (die hierin auch als "Master-Beleuchtungsvorrichtung" bezeichnet wird) abhängigen Beleuchtungsvorrichtungen können als Slave-Beleuchtungsvorrichtungen bezeichnet werden. Die Slave-Beleuchtungsvorrichtung benötigt lediglich eine Kommunikationsschnittstelle zur Kommunikation mit der Master-Beleuchtungsvorrichtung. Über diese Kommunikationsschnittstelle kann es beispielsweise möglich sein, mehrere Slave-Beleuchtungsvorrichtungen, beispielsweise in der Art einer Dasy-Chain-Verbindung, in einer Stern-Topologie oder einer anderen Topologie mit einem oder mehreren Knotenpunkten an eine einzige Master-Beleuchtungsvorrichtung anzuschließen. Beleuchtungsvorrichtungen, die als Master vorgesehen sind, und Beleuchtungsvorrichtungen, die als Slave vorgesehen sind, können somit hinsichtlich der Steuerungs- und Schnittstelleneinheit unterschiedlich aufgebaut sein. Es ist jedoch auch möglich, in einer Beleuchtungsvorrichtung alle erforderlichen Kommunikationsschnittstellen und Hardwareelemente vorzusehen, sodass die Beleuchtungsvorrichtung sowohl als Master-, als auch als Slave- Beleuchtungsvorrichtung verwendet werden kann.

Beispiele für entsprechende Beleuchtungsanordnungen sind in der Druckschrift AT 518823 A1 der gegenständlichen Anmelderin offenbart und es wird davon ausgegangen, dass der Fachmann die Lehren dieser Druckschrift kennt und sie von sich aus auf die gegenständliche Anmeldung anwenden kann.

Die gegenständliche Erfindung betrifft in einem weiteren Aspekt ein modulares Beleuchtungssystem, welches zumindest eine Beleuchtungsvorrichtung der oben beschrieben Art aufweist, die über zumindest eine Kommunikationsinfrastruktur mit zumindest einer weiteren Beleuchtungsvorrichtung der oben beschriebenen Art verbunden ist. Somit können mehrere erfindungsgemäße Beleuchtungsvorrichtungen zu einem modularen Beleuchtungssystem zusammengestellt werden. Entsprechende Beleuchtungsvorrichtungen und modulare Beleuchtungssysteme können als Erweiterung zu entsprechenden Bildsensoren, insbesondere von Machine-Vision-Kameras (MV-Kameras) verwendet werden. Durch die Möglichkeit der zentralen Ansteuerung der Beleuchtungseinheit (beziehungsweise aller Beleuchtungseinheiten eines entsprechenden modularen Beleuchtungssystems) können beispielsweise Hell- und Dunkelfelder stufenlos generiert werden.

Als "Kommunikationsinfrastruktur" werden im Zusammenhang mit der gegenständlichen Beschreibung beliebige Datenverbindungen und Schnittstellen bezeichnet, über die eine Datenübertragung zwischen zwei Beleuchtungsvorrichtungen bzw. zwischen einer Beleuchtungsvorrichtung und einer anderen Einheit, wie etwa eine zentrale Steuereinheit, realisierbar ist. Zu Beispielen dafür zählen Bus-Systeme, vorzugsweise industrielle Bus-Systeme, aber auch paketvermittelte Datenübertragungsstrukturen, wie etwa kabelgebundene oder kabellose paketvermittelte Datennetze, insbesondere LAN- und WLAN-Netze oder ähnliche.

Im Zusammenhang mit modernen Industrieanlagen können als Kommunikationsinfrastruktur Bussysteme verwendet werden, mit denen auch andere Feldgeräte untereinander und/oder mit einer oder mehreren übergeordneten Steuereinheit(en) verbunden werden. Zu Beispielen solcher industriellen Bussysteme zählen, ohne darauf beschränkt zu sein, die als Profibus® PA, Foundation Fieldbus® oder HART® bezeichneten Systeme. Normalerweise handelt es sich bei der übergeordneten Steuereinheit um ein Leitsystem oder um eine Einheit in der Art der bereits zuvor näher spezifizierten zentralen Steuereinheit. Die übergeordnete Steuereinheit kann auch zur Prozesssteuerung, zur Prozessvisualisierung, zur Prozessüberwachung sowie zur Inbetriebnahme und Bedienung der Feldgeräte dienen. Zu Programmen, die auf übergeordneten Steuereinheiten eigenständig ablaufen, zählen beispielsweise das Bedientool FieldCare der Firmengruppe Endress + Hauser, das Bedientool Pactware, das Bedientool AMS von Fisher-Rosemount oder das Bedientool PDM von Siemens. Zu Bedientools, die in Leitsystem-Anwendungen integriert sind, zählen das PCS7 von Siemens, das Symphony von ABB und das Delta V von Emerson.

Als "Feldgeräte" werden im Zusammenhang mit der gegenständlichen Offenbarung alle in den Bereich der Automatisierungstechnik eingebundene technische Einheiten bezeichnet, die in einer industriellen Anlage vorgesehen sein können, insbesondere Aktoren (Stellglieder, Ventile, Roboter, etc.), Sensoren und Beleuchtungseinheiten.

Die Integration von Feldgeräten in Konfigurations- oder Managementsysteme bzw. übergeordnete Steuereinheiten erfolgt über Gerätebeschreibungen, die dafür Sorge tragen, dass die übergeordneten Einheiten die von den Feldgeräten gelieferte Information erkennen und interpretieren können. Bereit gestellt werden die Gerätebeschreibungen für jeden Feldgerätetyp bzw. für jeden Feldgerätetyp in unterschiedlichen Anwendungen von dem jeweiligen Gerätehersteller. Damit die Feldgeräte in unterschiedliche Feldbussysteme integriert werden können, müssen unterschiedliche Gerätebeschreibungen für die unterschiedlichen Feldbusse erstellt werden. So gibt es - um nur einige Beispiele zu nennen - HART-, Fieldbus Foundation- und Profibus-Gerätebeschreibungen.

Zwecks Schaffung einer einheitlichen Beschreibung für die Feldgeräte, haben die Fieldbus Foundation (FF), die HART Communication Foundation (HCF) und die Profibus Nutzerorganisation (PNO) eine einheitliche elektronische Gerätebeschreibung (Electronic Device Description EDD) erstellt. Die EDD ist in der Norm IEC 61804-2 definiert. Die Buskommunikationsvorrichtung weist eine integrierte Bussteuerungs- und Energieversorgungseinrichtung auf. Dadurch können auf einer gemeinsamen Busleitung sowohl elektrische Energie in Form von Gleichstrom, als auch digitale Signale übertragen werden. Dabei handelt es sich um ein Feldbussystem.

Das gleichzeitige Übertragen von Datensignalen über Energieversorgungsleitungen ist auch bei LAN-Netzwerken bekannt, beispielsweise in Haushalten über sogenannte Power-Line-Adapter.

Es wird vorausgesetzt, dass die hierin beschriebenen und gegebenenfalls mit deren üblichen Markenbezeichnungen bezeichnete Systeme, sowie ähnliche Systeme, dem Durchschnittsfachmann bekannt sind, und dass eine Implementierung dieser Systeme im Zusammenhang mit der gegenständlichen Erfindung im Können des Durchschnittsfachmanns liegt. Alle hierin angeführten Systeme, Spezifikationen, Standards und Normen beziehen sich jeweils auf die zum Prioritätszeitpunkt der gegenständlichen Anmeldung gültige Fassung.

In vorteilhafter Weise kann im erfindungsgemäßen modularen Beleuchtungssystem zumindest eine erste Beleuchtungsvorrichtung als Master-Beleuchtungsvorrichtung vorgesehen sein, wobei zumindest eine weitere Beleuchtungsvorrichtung als eine von dieser Master-Beleuchtungsvorrichtung abhängige Slave-Beleuchtungsvorrichtung vorgesehen sein kann. Dies erlaubt eine zentrale Ansteuerung mehrerer Beleuchtungsvorrichtungen über die Master-Beleuchtungsvorrichtung(en). Die Anzahl der Master- und Slave-Beleuchtungsvorrichtung ist nicht beschränkt, d.h. es können auch Multimastersysteme verwendet werden, in denen mehrere Beleuchtungsvorrichtungen Masterfunktionen übernehmen. Gegebenenfalls können auch Systeme ohne definierte Master-Slave-Hierarchie zum Einsatz kommen, etwa zwei parallel angeordnete Beleuchtungssysteme, die jeweils die selben Berechtigungen besitzen.

Gemäß einer weiteren vorteilhaften Ausführungsform können im modularen Beleuchtungssystem zwei oder mehrere Slave-Beleuchtungsvorrichtungen vorgesehen sein, die vorzugsweise in Form einer Dasy-Chain-Anordnung an die Master-Beleuchtungsvorrichtung angeschlossen sein können. Dies erlaubt eine zentrale Ansteuerung des gesamten modularen Beleuchtungssystems über die Master-Beleuchtungsvorrichtung.

Weiters betrifft die Erfindung ein Bilderfassungssystem zur Verwendung in einem maschinell sehenden System, insbesondere in einem industriellen Bildverarbeitungssystem, umfassend zumindest einen Bildsensor und zumindest eine erfindungsgemäße Beleuchtungsvorrichtung und/oder ein erfindungsgemäßes modulares Beleuchtungssystem.

Die gegenständliche Erfindung wird nachfolgend unter Bezugnahme auf die Figuren 1 bis 8 näher erläutert, die beispielhaft, schematisch und nicht einschränkend vorteilhafte Ausgestaltungen der Erfindung zeigen. Dabei zeigt
Fig.1 eine erfindungsgemäße Beleuchtungsvorrichtung in einer schaubildlichen Darstellung,
Fig. 2 die Beleuchtungsvorrichtung in einer Schnittansicht entlang der Linie II-II der Fig. 1,
Fig. 3 ein beispielhaftes Bilderfassungssystem in einer schaubildlichen Darstellung,
Fig. 4 bis 6 mehrere beispielhafte Konfigurationen eines modularen Beleuchtungssystems gemäß der Erfindung,
Fig. 7 eine weitere Ausführungsform der erfindungsgemäßen Beleuchtungsvorrichtung in einer Seitenansicht und
Fig. 8 die Beleuchtungsvorrichtung der Fig. 7 in einer schaubildlichen Darstellung.

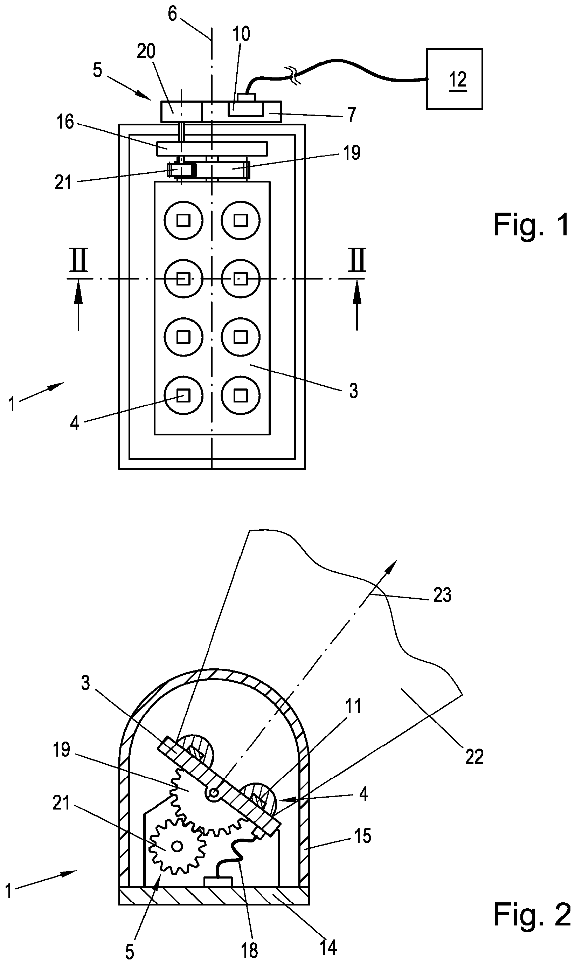

In Fig. 1 und 2 ist eine erfindungsgemäße Beleuchtungsvorrichtung 1 einmal in einer Draufsicht und einmal in einer Schnittdarstellung dargestellt. Die Beleuchtungsvorrichtung 1 weist eine Basis 14 und einer daran angeordneten lichtdurchlässige Abdeckung 15 auf, die als Gehäuse dienen. Auf der Basis 14 ist eine Halterung 16 angeordnet, an der ein Leuchtmittelträger 3 um eine Schwenkachse 6 schwenkbar angeordnet ist. Die Leuchtmittelträger 3 der in den Figuren dargestellten Ausführungsformen sind jeweils nur um eine einzige Schwenkachse schwenkbar, es können jedoch mit geringem Aufwand ein oder mehrere weitere Schwenkachsen vorgesehen sein und gegebenenfalls kann auch eine translatorische Verlagerung der Schwenkachse (bzw. des Leuchtmittelträgers) vorgesehen werden. Die Umsetzung solcher Alternativen liegen im Können eines Durchschnittsfachmanns.

Als "lichtdurchlässig" werden im Zusammenhang mit der gegenständlichen Offenbarung alle Materialien bezeichnet, die die Fähigkeit besitzen, einen Anteil Lichtspektrums hindurchzulassen. Als "Lichtspektrum" wird dabei sowohl das für den Menschen sichtbare Spektrum, aus auch die an diesen Bereich angrenzenden Lichtbereiche, insbesondere der Infrarot- und der Ultraviolettbereich bezeichnet. Im engeren Sinn bezieht sich der Begriff "lichtdurchlässig" auf zumindest einen Wellenlängenbereich, der von den jeweiligen Leuchtmitteln ausgestrahlt werden kann. Der Begriff "lichtdurchlässig" umfasst als Oberbegriff insbesondere die Bezeichnungen "opak", "durchsichtig", "transparent", "transluzent", "durchscheinend", etc.

Die Oberflächen der lichtdurchlässigen Abdeckung 15 können im Wesentlichen glatt oder strukturiert sein. Die Abdeckung 15 kann beispielsweise in Form eines Kuppelgehäuses ausgebildet. Gegebenenfalls kann die Abdeckung 15 ganz oder teilweise lichtstreuende Eigenschaften aufweisen, etwa um ein diffuses Licht zu erzeugen. Die Abdeckung 15 kann gegebenenfalls mit einer oder mehreren Folien versehen sein, welche die Lichtdurchlässigkeit beeinflussen, wobei die Folien gegebenenfalls fototechnische Strukturen aufweisen kann. Solche Merkmale der Abdeckung 15 erlauben es, in diese - neben der eigentlichen Schutzfunktion - auch zusätzliche vorteilhafte Funktionalitäten zu integrieren, etwa Eigenschaften, die für fototechnischen Anwendungen vorteilhaft sind. Der Leuchtmittelträger 3 ist als eine längliche Platte ausgebildet, auf deren zur Abdeckung 15 hin ausgerichteten Oberfläche mehrere Leuchtmittel 4 angeordnet sind. In der dargestellten, beispielhaften Anordnung sind acht Leuchtmittel 4 in zwei parallelen Reihen auf dem Leuchtmittelträger angeordnet, es können jedoch auch deutlich mehr oder weniger Leuchtmitteln 4 vorgesehen sein, wobei die Leuchtmittel 4 in einer oder mehreren Reihen in der Art einer Balkenleuchte oder auch in einer anderen, beispielsweise ringförmigen, Anordnung vorgesehen sein können. Jedes Leuchtmittel 4 weist eine Leuchtdiode 11 auf, die von einem Linsenkörper 17 umfasst ist. Eine solche Anordnung ist beispielsweise aus dem Bereich der Hochleistungs-LEDs bekannt und muss hierin nicht näher erläutert werden. Gegebenenfalls können auch andere Arten von Leuchtmitteln verwendet werden.

Die Leuchtmittel 4 sind auf dem Leuchtmittelträger 3 angeordnet und (lösbar oder unlösbar) an diesem in einer definierten Position und Ausrichtung befestigt, wobei das von den Leuchtmitteln 4 erzeugte Licht üblicherweise in Form eines Lichtkegels 22 abgestrahlt wird. Die Mitte des Lichtkegels 22 definiert eine Abstrahlungsrichtung 23, die im dargestellten Fall im Wesentlichen normal auf die Oberfläche des Leuchtmittelträgers 3 ausgerichtet ist. Die Abstrahlungsrichtung 23 kann durch Verschwenken des Leuchtmittelträgers 3 verändert werden.

Der Leuchtmittelträger 3 kann beispielsweise in Form einer Leiterplatte hergestellt sein, in der die elektrischen Leitungen zu den Leuchtmitteln 4 integriert sind. Die Leiterplatte kann an der den Leuchtmitteln 3 abgewandten Rückseite einen Anschluss für ein Anschlusskabel 18 aufweisen, das die Leitungen des Leuchtmittelträgers 3 mit den anderen elektronischen Bauteilen der Beleuchtungsvorrichtung 1 verbindet. Das Anschlusskabel 18 ist auseichend flexibel, um ein Verschwenken des Leuchtmittelträgers 3 in vollem Ausmaß zu erlauben und kann beispielsweise als bekanntes Flachkabelband ausgeführt sein.

An dem Leuchtmittelträger 3 ist ein Getrieberad 19 befestigt, das mit einem von einer Antriebseinheit 20 betätigten Ritzel 21 im Eingriff ist. Die Einheit aus Antriebseinheit 20, Ritzel 21 und Getrieberad 19 bildet eine Verstelleinheit 5, mit der die Leuchtmittelträger 3 um die Schwenkachse 6 verschwenkt werden kann. Die Antriebseinheit 20 kann in der dargestellten Ausführungsform beispielsweise ein Schrittmotor sein, die Erfindung ist jedoch nicht auf die Verwendung rotatorischer Motoren beschränkt, sondern es können auch lineare Motoren, Piezoelemente oder beliebige andere Stelleinheiten verwendet werden, die eine elektronisch betätigte Winkelverstellung (und gegebenenfalls auch lineare Verschiebung) des Leuchtmittelträgers erlauben. Zu Beispielen solcher alternativer Verstelleinheiten 5 zählen etwa auch Folien, die sich bei Anlegen einer bestimmten Spannung krümmen, wodurch eine Winkeländerung erzielt wird.

Die Verstelleinheit 5 wird von einer Steuerungs- und Schnittstelleneinheit 7 angesteuert. In Fig. 1 und 2 sind die Steuerungs- und Schnittstelleneinheit 7 und die Antriebseinheit 20 außerhalb des durch die Basis 14 und die Abdeckung 15 definierten Gehäuses angeordnet, sie können sich jedoch auch innerhalb des Gehäuses befinden oder in einem eigenen Gehäuse geschützt angeordnet sein. Die Steuerungs- und Schnittstelleneinheit 7 weist eine Kommunikationsschnittstelle 10 auf, über die die Steuerungs- und Schnittstelleneinheit 7 mit einer zentralen Steuereinheit 12 in Verbindung steht. Alternativ oder zusätzlich kann die Steuerungs- und Schnittstelleneinheit 7 eine Kommunikationsschnittstelle 10 aufweisen, die eine Verbindung mit einer weiteren Beleuchtungsvorrichtung 1 ermöglicht. Die Steuerungs- und Schnittstelleneinheit 7 kann beispielsweise als Microcontroller oder als Field-Programmable-Gate-Array (FPGA) ausgeführt sein.

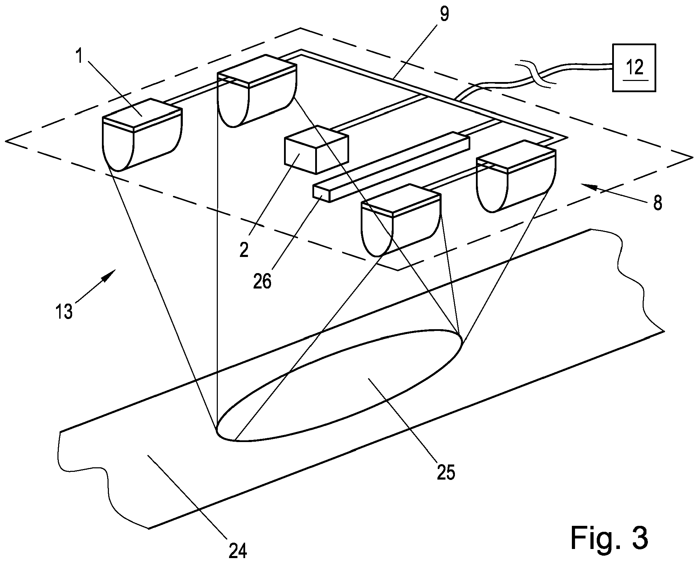

Die Beleuchtungsvorrichtung 1 kann beispielsweise mit der Basis 14 an einer fixen Position im Umfeld eines auszuleuchtenden Bereichs einer Anlage fixiert werden. Da die Beleuchtungsvorrichtung 1 von der zentralen Steuereinheit 12 gesteuert werden kann, ist eine Synchronisierung der Beleuchtung mit einer MV-Kamera möglich. Gegebenenfalls kann die Beleuchtungsvorrichtung 1 auch an einem bewegten Element einer Anlage befestigt sein, wobei eine automatische Anpassung des Winkels des Lichtkegels durch Detektion der aktuellen Lage im Raum mit Hilfe einer eingebauten oder externen Sensorik (z. B. eines Lagesensors) durchgeführt werden kann. Die Beleuchtungsvorrichtung 1 kann auch mit anderen Sensoren verbunden sein, oder solche auch enthalten. Beispielsweise kann die Homogenität der Ausleuchtung einer von der Beleuchtungsvorrichtung 1 beleuchtete Fläche mithilfe eines externen Sensors (z.B. den in Fig. 3 dargestellten Homogenitätssensor 26, der beispielsweise als Flächen- oder Zeilensensor ausgebildet sein kann) ermittelt werden. Durch eine Anpassung des Winkels des Lichtkegels kann eine automatische Homogenitätsregulierung der beleuchteten Fläche umgesetzt werden.

Auch Änderungen der Homogenität, welche durch wellenlängenabhängige Brechungen der Optik verursacht werden, können durch das verstellen des Winkels automatisch von der Steuerungs- und Schnittstelleneinheit 7 oder von der zentralen Steuereinheit 12 aus gesteuert ausgeglichen werden.

Somit ist es mit der Beleuchtungsvorrichtung 1 möglich, den Belichtungswinkel auf ein Objekt reproduzierbar und mit hoher Winkelgenauigkeit einzustellen. Sowohl Hell- als auch Dunkelfelder können quasi stufenlos generiert werden. Die Homogenität der beleuchteten Fläche kann mit Hilfe eines eingebauten oder externen Flächen- oder Zeilensensors automatisch optimiert werden.

Aufgrund des modularen Aufbaus der Beleuchtungsvorrichtung 1 lassen sich diese Vorteile nicht nur für eine einzelne Beleuchtungsvorrichtung 1 realisieren, sondern sie können auch für eine Gruppe solcher Beleuchtungsvorrichtungen 1 genutzt werden. Eine solche Gruppe wird im Zusammenhang mit der gegenständlichen Offenbarung als modulares Beleuchtungssystem 8 bezeichnet und ist in Fig. 3 beispielhaft dargestellt. Das modulare Beleuchtungssystem 8 der Fig. 3 umfasst vier Beleuchtungsvorrichtungen 1, die jeweils parallel zueinander an zwei Seiten eines Bildsensors 2 an einer gemeinsamen Grundfläche angeordnet sind. Der Bildsensor 2, die Beleuchtungsvorrichtung 1 und eine in Fig. 3 nur schematisch dargestellte zentrale Steuereinheit 12 kommunizieren über eine Kommunikationsinfrastruktur 9 untereinander. Die Kommunikationsinfrastruktur 9 ist rein schematisch und beispielhaft dargestellt, und repräsentiert beispielhaft alle Varianten an Kommunikationsverbindungen, die dem Fachmann für diese Zwecke bekannt sind.

Die Einheit aus Beleuchtungsvorrichtungen 1, Bildsensor 2 und Kommunikationsinfrastruktur 9 wird im Zusammenhang mit der gegenständlichen Offenbarung als Bilderfassungssystem 13 bezeichnet. Der Bildsensor 2 kann beispielsweise eine MV-Kamera sein, die auf einen zu überwachenden Bereich 25 einer industriellen Anlage 24 ausgerichtet ist. Durch das Einstellen der Abstrahlungsrichtungen bzw. Abstrahlungswinkel der einzelnen Beleuchtungsvorrichtungen 1 lässt sich die Homogenität der Ausleuchtung des zu überwachenden Bereichs 25 optimieren. Die Homogenität kann über den Homogenitätssensor 26 ermittelt werden, der in Fig. 3 nur schematisch angedeutet ist. Gegebenenfalls kann der Homogenitätssensor 26 auch im Bereich des zu überwachenden Bereichs 25, beispielsweise in eine Oberfläche der Anlage 24 integriert, vorgesehen sein.

Die Beleuchtungseinrichtungen 1 können winkel- und belichtungssynchron im Wesentlichen in Echtzeit angesteuert werden. Die Einstellungen der jeweiligen Anwendung können abgespeichert und bei Bedarf wieder abgerufen werden (z. B. bei einem wiederholenden Chargenwechsel). Des Weiteren lassen sich sowohl die Homogenität der beleuchteten Fläche als auch die Belichtungsdauer und die Wellenlänge (vorgegebene Auswahl aus verschiedenen Wellenlängen) quasi beliebig anpassen.

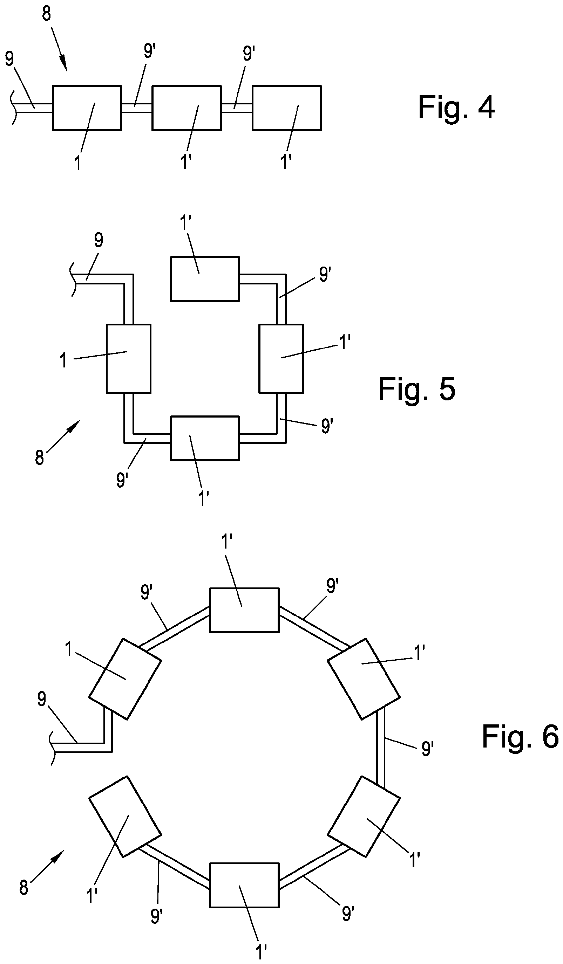

Erfindungsgemäß ist es möglich, modulare Beleuchtungssysteme 8 mit unterschiedlichen Kombinationen und Konfigurationen an Beleuchtungsvorrichtungen 1 zu erstellen, die jeweils auf den beabsichtigten Beleuchtungszweck optimiert sind. In Fig. 4 bis 6 sind mehrere Konfigurationen beispielhaft dargestellt.

Fig. 4 zeigt ein Beispiel eines modulares Beleuchtungssystem 8, das eine lineare Anordnung von drei Beleuchtungsvorrichtungen 1,1' umfasst, wobei eine erste Beleuchtungsvorrichtung 1 über eine erste Kommunikationsinfrastruktur 9, beispielsweise ein industrielles Bussystem, mit einer zentralen Steuereinheit 12 (in Fig. 4 nicht dargestellt) verbunden ist. Die erste Beleuchtungsvorrichtung 1 ist als Master-Beleuchtungsvorrichtung ausgebildet, d.h. sie weist eine Kommunikationsschnittstelle zu der ersten Kommunikationsinfrastruktur 9 und ein weitere Kommunikationsschnittstelle zu einer weiteren Kommunikationsinfrastruktur 9' auf, an der in einer seriellen Anordnung zwei Slave-Beleuchtungsvorrichtungen 1' angeordnet sind.

Fig. 5 zeigt eine ein weiters Beispiel eines modularen Beleuchtungssystems 8, das eine rechteckige Anordnung von vier Beleuchtungsvorrichtungen 1,1' umfasst. Dabei ist wiederum ein Master-Beleuchtungsvorrichtung 1 über eine erste Kommunikationsinfrastruktur 9 mit einer zentralen Steuereinheit 12 verbunden ist und die anderen drei Beleuchtungsvorrichtungen 1' sind über eine weitere Kommunikationsinfrastruktur 9' als Slave-Beleuchtungsvorrichtungen 1' vorgesehen.

In ähnlicher Weise können auch mehrere Beleuchtungsvorrichtungen 1 beispielsweise in einer im Wesentlichen ringförmigen Anordnung vorgesehen werden, wie dies etwa bei der in Fig. 6 dargestellten sechseckigen Anordnung gezeigt ist. Auf analoge Weise können modulare Beleuchtungssysteme mit zahlreichen Beleuchtungsvorrichtungen 1 realisiert werden. Um eine bessere Homogenität zu erzielen kann das modulare Beleuchtungssystem auch eine ungerade Anzahl an Beleuchtungsvorrichtungen aufweisen und/oder die Beleuchtungsvorrichtungen können regelmäßig oder unregelmäßig verteilt angeordnet sein.

Die in Fig. 4 bis 6 dargestellten modularen Beleuchtungssysteme 8 sind alle in einer Ebene ausgerichtet, wodurch es möglich ist, die einzelnen Beleuchtungsvorrichtungen 1 beispielsweise auf einer gemeinsamen Montageplatte zu befestigen. Es ist jedoch auch möglich, unterschiedliche Beleuchtungsvorrichtungen 1 eines modularen Beleuchtungssystems 8 in unterschiedlichen im Raum verteilten Positionen anzuordnen, wenn dies für die jeweilige Anwendung gewünscht ist.

Mithilfe der oben dargestellten modularen Beleuchtungssysteme 8 kann die Abstrahlungsrichtung jeder einzelnen Beleuchtungsvorrichtung 1 über die jeweilige Verstelleinheit 5 eingestellt werden. Dabei empfängt die Steuerungs- und Schnittstelleneinheit 7 der Master-Beleuchtungsvorrichtung 1 die über die Kommunikationsinfrastruktur 9 von der zentralen Steuereinheit 12 übermittelten Ansteuersignale, die gegebenenfalls von einem in der Master-Beleuchtungsvorrichtung 1 vorgesehenen Gateway über die weitere Kommunikationsinfrastruktur 9' zu den jeweiligen Slave-Beleuchtungsvorrichtungen 1' weitergeleitet werden. Damit können sowohl die Belichtungsparameter, wie etwa die Wellenlänge, die Belichtungsdauer oder der Belichtungszeitpunkt), als auch der jeweilige Abstrahlungswinkel der Beleuchtungsvorrichtungen 1,1' unabhängig voneinander angesteuert werden. Eine optimale Abstimmung der einzelnen Abstrahlungswinkel ist für die Homogenität der Ausleuchtung wesentlich.

Durch das aufeinander abgestimmte Einstellen der Abstrahlungswinkel der einzelnen Beleuchtungsvorrichtungen 1 kann die Homogenität des auszuleuchtenden Bereichs auch gezielt variiert werden. Bei Verwendung eines Homogenitätssensors 26, kann die aktuelle Homogenität der beleuchteten Fläche ermittelt werden, um in einem weiteren Schritt automatisch die optimale Homogenität für den gewünschten Anwendungsbereich zu generieren.

In der Praxis kann ein erfindungsgemäßes Bilderfassungssystem 13 beispielsweise gemäß dem im folgenden beschriebenen Ablauf betrieben werden. Entsprechend der gewünschten Anwendung werden die Abstrahlungswinkel der einzelnen Beleuchtungsvorrichtungen 1 zur Erzeugung des gewünschten Hell- oder Dunkelfeldes eingestellt. Bevor der Bildsensor 2 eine Aufnahme erzeugt, werden noch die entsprechenden Belichtungsparameter (Wellenlänge, Belichtungsdauer, Belichtungszeitpunkt) der Master-Beleuchtungsvorrichtung 1 eingestellt. Sind zusätzliche Slave-Beleuchtungen integriert, werden diese über die Master-Beleuchtung konfiguriert. Über eine Benutzerschnittstelle, die beispielsweise als eine graphische Benutzeroberfläche (GUI) ausgebildet sein kann, können sowohl alle zu diagnostizierenden Daten, wie beispielsweise die Temperatur oder Lichtintensität, als auch die eingestellten Parameter zur Überprüfung dargestellt werden. Beim Auslösen des Bildsensors 2 wird dann von dem modularen Beleuchtungssystem 8 ein zeitlich synchroner Lichtblitz mit den eingestellten Parametern erzeugt.

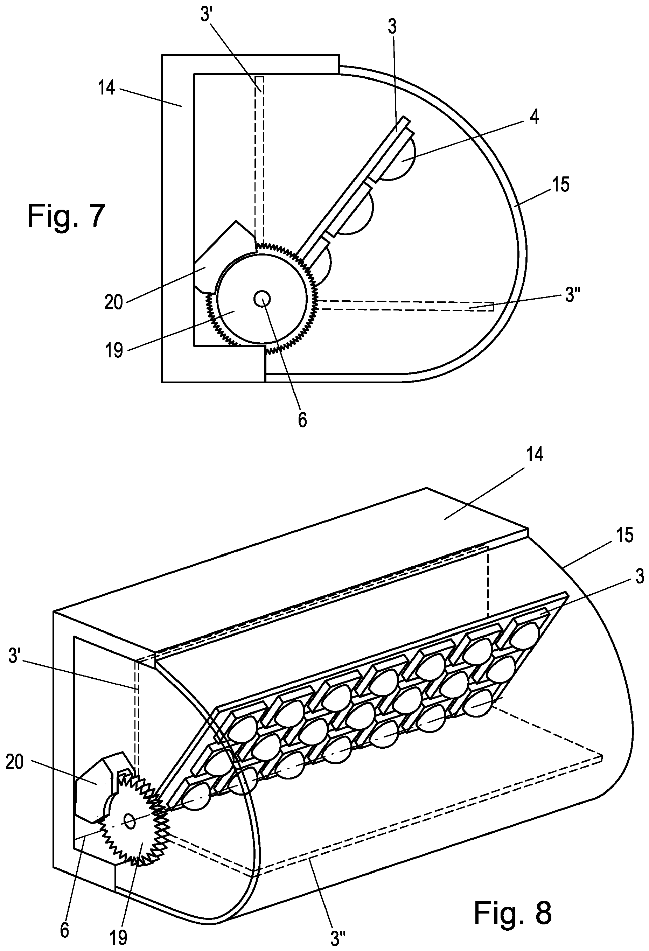

Fig. 7 und 8 zeigen eine weiter Ausführungsform einer erfindungsgemäßen Beleuchtungsvorrichtung 1, die beispielsweise für eine Montage an einer vertikalen Fläche besonders geeignet ist. Für analoge Bauteile werden im Folgenden die gleichen Bezeichnungen und Bezugszeichen verwendet, wie in der bisherigen Beschreibung. Die Beleuchtungsvorrichtung 1 umfasst wiederum ein Gehäuse mit einer Basis 14 und einer lichtdurchlässigen Abdeckung 15. Auf einem rechteckigen Leuchtmittelträger 3 ist wiederum eine Vielzahl an Leuchtmitteln 4 angeordnet. Der Leuchtmittelträger 3 kann um eine Schwenkachse 6 geschwenkt werden, die jedoch an einer Längsseite des

Leuchtmittelträgers 3 verläuft, wobei ein am Leuchtmittelträger 3 befestigtes Getrieberad 19 von einer an der Basis befestigten Antriebseinheit 20 betätigt wird. Der Leuchtmittelträger kann zwischen einer zur Basis 14 im Wesentlichen parallelen Position 3' und einer zur Basis 14 im Wesentlichen normal abstehenden Position 3" in jede dazwischenliegende Winkelposition eingestellt werden.

### Bezugszeichen:

Beleuchtungsvorrichtung 1
Bildsensor 2
Leuchtmittelträger 3
Leuchtmittel 4
Verstelleinheit 5
Schwenkachse 6
Steuerungs- und Schnittstelleneinheit 7
modulares Beleuchtungssystem 8
Kommunikationsinfrastruktur 9
Kommunikationsschnittstelle 10
Leuchtdiode 11
zentrale Steuereinheit 12
Bilderfassungssystem 13
Basis 14
Abdeckung 15
Halterung 16
Linsenkörper 17
Anschlusskabel 18
Getrieberad 19
Antriebseinheit 20
Ritzel 21
Lichtkegel 22
Abstrahlungsrichtung 23
industrielle Anlage 24
zu überwachender Bereich 25
Homogenitätssensors 26

## Patentansprüche

1. Beleuchtungsvorrichtung (1) zur Beleuchtung eines von zumindest einem Bildsensor (2) überwachten Bereichs, wobei die Beleuchtungsvorrichtung (1) zumindest einen Leuchtmittelträger (3) mit zumindest einem daran angeordneten Leuchtmittel (4) aufweist, **dadurch gekennzeichnet, dass** die Beleuchtungsvorrichtung (1) eine Steuerungs- und Schnittstelleneinheit (7) und eine von der Steuerungs- und Schnittstelleneinheit (7) betätigbare Verstelleinheit (5) aufweist, mit welcher der Leuchtmittelträger (3) positionierend verstellbar ist.

2. Beleuchtungsvorrichtung (1) nach Anspruch 1, **dadurch gekennzeichnet, dass** der Leuchtmittelträger (3) um zumindest eine Schwenkachse (6) schwenkbar und/oder entlang einer Bahn translatorisch verschiebbar ist.

3. Beleuchtungsvorrichtung (1) nach Anspruch 1 oder 2, **dadurch gekennzeichnet, dass** die Steuerungs- und Schnittstelleneinheit (7) zur Steuerung der Wellenlänge und/oder der Intensität und/oder des zeitlichen Verlaufs der Aktivierung zumindest eines der Leuchtmittel (4) ausgebildet ist.

4. Beleuchtungsvorrichtung (1) nach einem der Ansprüche 1 bis 3, **dadurch gekennzeichnet, dass** die Steuerungs- und Schnittstelleneinheit (7) mit einem internen oder externen Sensor verbunden ist, welcher eine Ermittlung einer aktuellen Lage der Beleuchtungsvorrichtung (1) und/oder des Leuchtmittelträgers (3) im Raum erlaubt.

5. Beleuchtungsvorrichtung (1) nach einem der Ansprüche 1 bis 4, **dadurch gekennzeichnet, dass** die Steuerungs- und Schnittstelleneinheit (7) zum Ausgleich einer wellenlängenbedingten Änderung eines Abstrahlungswinkels der Leuchtmittel (4) betätigbar ist.

6. Beleuchtungsvorrichtung (1) nach einem der Ansprüche 1 bis 5, **dadurch gekennzeichnet, dass** die Position des Leuchtmittelträgers (3) durch die Steuerungs- und Schnittstelleneinheit (7) zur Einstellung eines definierten Abstrahlungswinkels regelbar ist, und/oder dass die Position des Leuchtmittelträgers (3) durch die Steuerungs- und Schnittstelleneinheit (7) zur Regelung eines fixen oder veränderlichen Vorgabewerts regelbar ist.

7. Beleuchtungsvorrichtung (1) nach einem der Ansprüche 1 bis 6, **dadurch gekennzeichnet, dass** die Position des Leuchtmittelträgers (3) durch die Steuerungs- und Schnittstelleneinheit (7) unter Berücksichtigung einer Ausrichtung des Bildsensors (2) regelbar ist.

8. Beleuchtungsvorrichtung (1) nach einem der Ansprüche 1 bis 7, **dadurch gekennzeichnet, dass** die Position des Leuchtmittelträgers (3) durch die Steuerungs- und Schnittstelleneinheit (7) in Abhängigkeit eines von einer industriellen Anlage (24) ausgeführten Fertigungsprozesses und/oder in Abhängigkeit einer Position eines zu überwachenden Bereichs (25) regelbar ist.

9. Beleuchtungsvorrichtung (1) nach einem der Ansprüche 1 bis 8, **dadurch gekennzeichnet, dass** die Steuerungs- und Schnittstelleneinheit (7) mit zumindest einem internen oder externen Homogenitätssensor (26) verbunden oder an einen solchen anschließbar ist, über welchen eine aktuelle Homogenität einer Ausleuchtung ermittelbar ist.

10. Beleuchtungsvorrichtung (1) nach einem der Ansprüche 1 bis 9, **dadurch gekennzeichnet, dass** zumindest ein Leuchtmittel (4) eine Leuchtdiode (11) umfasst.

11. Beleuchtungsvorrichtung (1) nach einem der Ansprüche 1 bis 10, **dadurch gekennzeichnet, dass** die Steuerungs- und Schnittstelleneinheit (7) zumindest eine Kommunikationsschnittstelle (10) zur Kommunikation mit zumindest einer anderen Beleuchtungsvorrichtung (1) und/oder einer zentralen Steuereinheit (12) aufweist.

12. Modulares Beleuchtungssystem (8), welches zumindest eine Beleuchtungsvorrichtung (1) gemäß Anspruch 11 aufweist, die über zumindest eine Kommunikationsinfrastruktur (9) mit zumindest einer weiteren Beleuchtungsvorrichtung (1) gemäß Anspruch 11 verbunden ist.

13. Modulares Beleuchtungssystem (8) nach Anspruch 12, **dadurch gekennzeichnet, dass** zumindest eine erste Beleuchtungsvorrichtung (1) als Master-Beleuchtungsvorrichtung vorgesehen ist, wobei zumindest eine weitere Beleuchtungsvorrichtung (1) als eine von dieser Master-Beleuchtungsvorrichtung abhängige Slave-Beleuchtungsvorrichtung vorgesehen ist.

14. Modulares Beleuchtungssystem (8) nach Anspruch 13, **dadurch gekennzeichnet, dass** zwei oder mehrere Slave-Beleuchtungsvorrichtungen vorgesehen sind, die vorzugsweise in Form einer Dasy-Chain-Anordnung oder einer Stern-Topologie an die Master-Beleuchtungsvorrichtung angeschlossen sind.

15. Bilderfassungssystem (13) zur Verwendung in einem maschinell sehenden System, umfassend zumindest einen Bildsensor (2) und zumindest eine Beleuchtungsvorrichtung (1) gemäß einem der Ansprüche 1 bis 11 und/oder ein modulares Beleuchtungssystem (8) gemäß einem der Ansprüche 12 bis 14.

## Geänderte Patentansprüche

### Geänderte Patentansprüche gemäss Regel 137(2) EPÜ.

1. Beleuchtungsvorrichtung (1) zur Beleuchtung eines von zumindest einem Bildsensor (2) überwachten Bereichs, wobei die Beleuchtungsvorrichtung (1) zumindest einen Leuchtmittelträger (3) mit zumindest einem daran angeordneten Leuchtmittel (4) aufweist, wobei die Beleuchtungsvorrichtung (1) eine Steuerungs- und Schnittstelleneinheit (7) und eine von der Steuerungs- und Schnittstelleneinheit (7) betätigbare Verstelleinheit (5) aufweist, mit welcher der Leuchtmittelträger (3) positionierend verstellbar ist, **dadurch gekennzeichnet, dass** die Steuerungs- und Schnittstelleneinheit (7) zumindest eine Kommunikationsschnittstelle (10) zur Kommunikation mit einer zentralen Steuereinheit (12) über eine erste Kommunikationsinfrastruktur (9), welche ein industrielles Bussystem ist, aufweist und wobei die Position des Leuchtmittelträgers (3) durch die Steuerungs- und Schnittstelleneinheit (7) in Abhängigkeit eines von einer industriellen Anlage (24) ausgeführten Fertigungsprozesses und/oder in Abhängigkeit einer Position eines zu überwachenden Bereichs (25) regelbar ist.

2. Beleuchtungsvorrichtung (1) nach Anspruch 1, **dadurch gekennzeichnet, dass** der Leuchtmittelträger (3) um zumindest eine Schwenkachse (6) schwenkbar und/oder entlang einer Bahn translatorisch verschiebbar ist.

3. Beleuchtungsvorrichtung (1) nach Anspruch 1 oder 2, **dadurch gekennzeichnet, dass** die Steuerungs- und Schnittstelleneinheit (7) zur Steuerung der Wellenlänge und/oder der Intensität und/oder des zeitlichen Verlaufs der Aktivierung zumindest eines der Leuchtmittel (4) ausgebildet ist.

4. Beleuchtungsvorrichtung (1) nach einem der Ansprüche 1 bis 3, **dadurch gekennzeichnet, dass** die Steuerungs- und Schnittstelleneinheit (7) mit einem internen oder externen Sensor verbunden ist, welcher eine Ermittlung einer aktuellen Lage der Beleuchtungsvorrichtung (1) und/oder des Leuchtmittelträgers (3) im Raum erlaubt.

5. Beleuchtungsvorrichtung (1) nach einem der Ansprüche 1 bis 4, **dadurch gekennzeichnet, dass** die Steuerungs- und Schnittstelleneinheit (7) zum Ausgleich einer wellenlängenbedingten Änderung eines Abstrahlungswinkels der Leuchtmittel (4) betätigbar ist.

6. Beleuchtungsvorrichtung (1) nach einem der Ansprüche 1 bis 5, **dadurch gekennzeichnet, dass** die Position des Leuchtmittelträgers (3) durch die Steuerungs- und Schnittstelleneinheit (7) zur Einstellung eines definierten Abstrahlungswinkels regelbar ist, und/oder dass die Position des Leuchtmittelträgers (3) durch die Steuerungs- und Schnittstelleneinheit (7) zur Regelung eines fixen oder veränderlichen Vorgabewerts regelbar ist.

7. Beleuchtungsvorrichtung (1) nach einem der Ansprüche 1 bis 6, **dadurch gekennzeichnet, dass** die Position des Leuchtmittelträgers (3) durch die Steuerungs- und Schnittstelleneinheit (7) unter Berücksichtigung einer Ausrichtung des Bildsensors (2) regelbar ist.

8. Beleuchtungsvorrichtung (1) nach einem der Ansprüche 1 bis 7, **dadurch gekennzeichnet, dass** die Steuerungs- und Schnittstelleneinheit (7) mit zumindest einem internen oder externen Homogenitätssensor (26) verbunden oder an einen solchen anschließbar ist, über welchen eine aktuelle Homogenität einer Ausleuchtung ermittelbar ist.

9. Beleuchtungsvorrichtung (1) nach einem der Ansprüche 1 bis 8, **dadurch gekennzeichnet, dass** zumindest ein Leuchtmittel (4) eine Leuchtdiode (11) umfasst.

10. Beleuchtungsvorrichtung (1) nach einem der Ansprüche 1 bis 9, **dadurch gekennzeichnet, dass** die Steuerungs- und Schnittstelleneinheit (7) eine weitere Kommunikationsschnittstelle (10) zur Kommunikation mit zumindest einer weiteren Beleuchtungsvorrichtung (1') über eine weitere Kommunikationsinfrastruktur (9') aufweist, wobei die Steuerungs- und Schnittstelleneinheit (7) der Beleuchtungsvorrichtung (1) ausgebildet ist, über die erste Kommunikationsinfrastruktur (9) übermittelte Ansteuersignale zu empfangen und über die weitere Kommunikationsinfrastruktur (9') an die zumindest eine weitere Beleuchtungsvorrichtung (1') weiterzuleiten.

11. Modulares Beleuchtungssystem (8), welches zumindest eine Beleuchtungsvorrichtung (1) gemäß Anspruch 10 aufweist, die über zumindest eine Kommunikationsinfrastruktur (9) mit zumindest einer weiteren Beleuchtungsvorrichtung (1) gemäß Anspruch 10 verbunden ist.

12. Modulares Beleuchtungssystem (8) nach Anspruch 11, **dadurch gekennzeichnet, dass** zumindest eine erste Beleuchtungsvorrichtung (1) als Master-Beleuchtungsvorrichtung vorgesehen ist, wobei zumindest eine weitere Beleuchtungsvorrichtung (1) als eine von dieser Master-Beleuchtungsvorrichtung abhängige Slave-Beleuchtungsvorrichtung vorgesehen ist.

13. Modulares Beleuchtungssystem (8) nach Anspruch 12, **dadurch gekennzeichnet, dass** zwei oder mehrere Slave-Beleuchtungsvorrichtungen vorgesehen sind, die vorzugsweise in Form einer Dasy-Chain-Anordnung oder einer Stern-Topologie an die Master-Beleuchtungsvorrichtung angeschlossen sind.

14. Modulares Beleuchtungssystem (8) nach einem der Ansprüche 11 bis 13, **dadurch gekennzeichnet, dass** die zumindest eine Beleuchtungsvorrichtung (1) und die zumindest eine weitere Beleuchtungsvorrichtung (1') im Wesentlichen in Echtzeit winkel- und belichtungssynchron ansteuerbar sind [*S. 10, letzter Absatz*].

15. Bilderfassungssystem (13) zur Verwendung in einem maschinell sehenden System, umfassend zumindest einen Bildsensor (2) und zumindest eine Beleuchtungsvorrichtung (1) gemäß einem der Ansprüche 1 bis 10 und/oder ein modulares Beleuchtungssystem (8) gemäß einem der Ansprüche 11 bis 14.
